(19) **Europäisches Patentamt**

**European Patent Office**

**Office européen des brevets**

(11) **EP 1 459 862 A1**

(12) **EUROPEAN PATENT APPLICATION**

(43) Date of publication:
**22.09.2004 Bulletin 2004/39**

(51) Int Cl.7: **B29C 44/08**, B29C 44/14

(21) Application number: **03290683.6**

(22) Date of filing: **18.03.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** (71) Applicant: **ASKLE** **F-30000 Nîmes (FR)** | (72) Inventor: **Sebag, Albert** **30000 Nimes (FR)** (74) Representative: **Cabinet Hirsch** **58, avenue Marceau** **75008 Paris (FR)** |

(54) **Process for manufacturing moulded articles and articles having integral skin thus obtained**

(57)    The invention provides a process for manufacturing an article having an integral skin thereon, and articles that can be obtained by said process by

providing a mould having a first part and a second part;
depositing a first elastomeric skin material on the first part of the mould to obtain a first skin part;
depositing a second elastomeric skin material on the second part of the mould to obtain a second skin part;
depositing at least one core foam material on the first skin part;
closing the mould;
allowing the core foam material to rise, fill the mould cavity and cure; and
demoulding the finished article comprising a foamed core and an integral skin thereon.

FIG. 1

**Description**

FIELD OF THE INVENTION

The invention provides a novel process for manufacturing moulded articles having an integral skin and a foamed core, preferably made of polyurethane. The invention also provides novel moulded polyurethane articles.

BACKGROUND OF THE INVENTION

Foamed articles, especially polyurethane foamed articles are known for many years and used in many applications, especially for cushioning and mattresses. These articles are also sometimes aimed at applications where they are exposed to surface abrasion or the action of liquids: water (marine, water sport or other outdoor applications) or various body fluids and cleaning fluids (medical applications), including steam. Several techniques are already known to protect cushioning articles made from cellular materials with open cells such as flexible polyurethane foams, but they all suffer from disadvantages.

These foams may be covered by skins from leather or flexible synthetic "skin" materials made e.g. from plasticized PVC and/or other thermoplastic elastomers, including in the form of laminated composites with textiles and/or foams. These skins must be shaped into the mould using heat (thermoforming, rotomoulding), vacuum, or solvents, or combinations of these processes, to obtain the required shapes. These processes are delicate to operate because small defects may be difficult to hide, and expensive because of their tool and energy requirements. They often require elaborate ancillary operations such as stapling, glueing, stitching. Also, it is often difficult to provide complete protection on all sides, including mould parting lines, without leaks. And the skins produced by these processes are thinner at the edges and corners, i.e. the areas where they are subjected to the highest levels of mechanical stress.

Overall, it is difficult to design skin materials which are at the same time very thin, very soft to preserve the properties of the core material, very elastic to avoid the shear forces which may cause discomfort or even so-called decubitus ulcers when in contact with skin, and yet strong, impervious to fluids, and durable.

So-called "integral skin" foams which rely on physical blowing agents (as opposed to foams blown with carbon dioxide generated chemically by the reaction of water on isocyanate groups), do solve many of these problems, but this technology may only be applied to foams with relatively high density and hardness. Furthermore, they rely on hydrocarbons or hydrochlorofluorocarbons (HCFCs) which are increasingly restricted or even forbidden for regulatory reasons.

US-P-5938993 discloses a process for manufacturing foamed articles which are aimed at having a waterproof coating, such as marine cushions. In this process, a first polyurethane skin material is applied to the bottom surface of a 2-part mould and allowed to harden. A resilient foam is then poured in the mould over the skin, and allowed to rise to fill the mould cavity in the closed mould cavity. The upper lid of the mould is then removed and a second skin layer is then deposited over the foamed core. It is indicated that a seam is then formed. However, this technique does not give satisfactory results. The foamed core is said to be poured once the first layer is hardened; then 5 to 10 minutes are necessary for the foam to rise, fill the mould cavity and cure. Hence, when the second layer is deposited, the first one is almost completely cured, which prevents the formation of a tight, impervious seal around the parting line.

EP-A-0386818 describes a process where: (i) a polyurethane skin material is sprayed simultaneously onto the two inner sides of the shells of a 2-part mould; (ii) the mould is closed to ensure that a continuous seam is formed at the mould parting line; (iii) flexible foam material is injected into the closed mould cavity; and (iv) the mould is opened and the moulded article is demoulded after cure. The sprue end left after the foam has been injected exhibits no impervious skin and therefore provides easy access to fluids to the core part of the cushion. This is not acceptable if the cushion is to be exposed to water or other fluids.

US-P-6294248 discloses a process whereby a specific MDI based elastomer composition is sprayed onto both parts of a mould. A high resilience flexible foam composition, also based on MDI and comprising an amine additive to increase thixotropy and reduce liquid flow, is then poured into the mould. The foam composition expands to fill the mould, and the finished article is encapsulated into the elastomer. In this process, however, the foam material in the mould parting line provides the bond between the elastomer skins from both mould shells, so there is clearly no attempt to provide an impervious, seam-free elastomer skin.

Also, none of the above references is related to specific cushions and mattresses, where the respective contributions of the elastomeric skin and the soft support material to the support and comfort properties of the final composite material are optimised.

Hence, there is still a need for a soft cushioning article comprising (polyurethane) foam integrally covered with a soft and elastic skin which preserves the soft cushioning properties of the naked foam, and which is still impervious to liquids.

SUMMARY OF THE INVENTION

The invention relates to soft cushioning articles made from a core made at least partially from synthetic foam, and a soft outer "skin" made from a microcellular or non-cellular elastomer. The skin material is so selected that it does not substantially alter the cushioning performance of the flexible core. Both elements of this composite article are conveniently made of polyurethane polymers. This is achieved thanks to a novel process.

The present invention further affords products that are easily recyclable by chemical means. Another advantage of the invention is that the overall technology is inexpensive in raw material and manufacturing costs.

The present invention hence relates to a novel process for manufacturing soft moulded articles designed for cushioning applications such as seat cushions or pads, mattresses, etc.

The final articles have good elasticity and cushioning characteristics over a wide temperature range, combined with a good resistance to mechanical abrasion, general wear and tear, ageing characteristics, and especially liquid penetration. The final articles may comprise various straps or fastening accessories which are conveniently embedded or anchored by the elastomeric skin.

The instant articles can be high resilience seating, or special cushions such as those based on viscoelastic foams, gel cushions, or cushions based on any combinations of these materials, such as those designed for people in hospitals, or in homes for the old or handicapped, and other specialized institutions. Thus, the invention provides

The invention thus provides a process for manufacturing an article having an integral skin thereon, comprising the steps of:

(i) providing a mould having a first part and a second part;
(ii) depositing a first elastomeric skin material on the first part of the mould to obtain a first skin part;
(iii) depositing a second elastomeric skin material on the second part of the mould to obtain a second skin part;
(iv) depositing at least one core foam material on the first skin part;
(v) closing the mould;
(vi) allowing the core foam material to rise, fill the mould cavity and cure; and
(vii) demoulding the finished article comprising a foamed core and an integral skin thereon.

According to one embodiment, in step (iv) the depositing step is performed at a time comprised between the string time and the string free time of the first and second skin material.

According to one embodiment, in step (iv) the depositing step is performed after a time comprised between 5 and 60 seconds, preferably 10 and 45 seconds, after completion of depositing steps (ii) and/or (iii).

According to one embodiment, in step (iv) the depositing step is performed before a time comprised between 30 and 250 seconds, preferably 50 and 200 seconds, after completion of depositing steps (ii) and/or (iii).

According to one embodiment, step (vi) is performed during 40 to 800 seconds, preferably 50 to 400 seconds.

According to one embodiment, depositing steps (ii) and/or (iii) are performed by spraying.

According to one embodiment, depositing steps (ii) and/or (iii) are performed by RIM.

According to one embodiment, the elastomeric skin and foamed core material are polyurethanes or derivatives thereof.

According to one embodiment, the foamed core material is a resilient foam or a viscoelastic foam or comprises both.

According to one embodiment, the process further comprises, before step (iv), a step of depositing a gel layer on at least one of the skin elastomeric material.

The invention also provides a moulded foamed article having a core and an outer integral elastomeric skin, the core comprising a foamed material, the skin contributing to the article hardness, as measured using an hemispherical indentor, by no more than 25%, preferably 20%, more preferably 16%, advantageously 12%.

The invention further provides a moulded foamed article having a core and an outer integral elastomeric skin, the core comprising a foamed material, the elastomeric skin having a thickness from about 0.1 to about 1 mm, preferably 0.3 to 0.8 mm, most preferably 0.4 to 0.6 mm, and having a tensile strength from about 2000 to about 12000 kPa, preferably from about 3000 to about 10000 kPa.

The invention yet further provides a moulded foamed article having a core and an outer integral elastomeric skin, the core comprising at least two materials, one being a foamed material.

According to one embodiment, the article of the invention comprises a viscoelastic foam core or a resilient foam core or both.

According to one embodiment, the article of the invention further comprises a gel layer immediately adjacent to the elastomeric skin.

According to one embodiment, the elastomeric skin and foamed material are comprised of polyurethanes or derivatives thereof.

BRIEF DESCRIPTION OF THE DRAWINGS

In the appended drawings which illustrate the invention:

Fig. 1 is a schematic representation of a first embodiment of the process of the invention using the spraying technique for the skin material.
Fig. 2 is a schematic representation of a first embodiment of the process of the invention where the skin material is produced using the RIM technique.

DETAILED DESCRIPTION

The following description is given with respect to a foam, but it is understood that the core material may comprise resilient foams, viscoelastic foams, or gels, or layers thereof.

Resilient and visco-elastic foams are known in the art. The term "viscoelastic foam" is intended to designate those foams having a resilience of at most 25%, as measured according to the ISO 8307 standard. Resilient foams are those having a resilience of at least 25%, and high resilience foams have a resilience above 50%. Gels are also known in the art and can be defined as very soft, substantially non-compressible elastomeric compositions: very little force is needed to change the shape of these polymers, and they regain their original shape after the pressure is released. A preferred gel is a polyurethane gel. Gels can also be hydrogels, mineral oils, waxes, etc... high molecular weight paraffins, etc.

The process involves covering the interior sides of a mould with a thin and soft elastomeric skin. This skin is preferably made of polyurethane or polyurethane/urea polymer. This is applied by a spraying process or a RIM process (Reaction Injection Moulding).

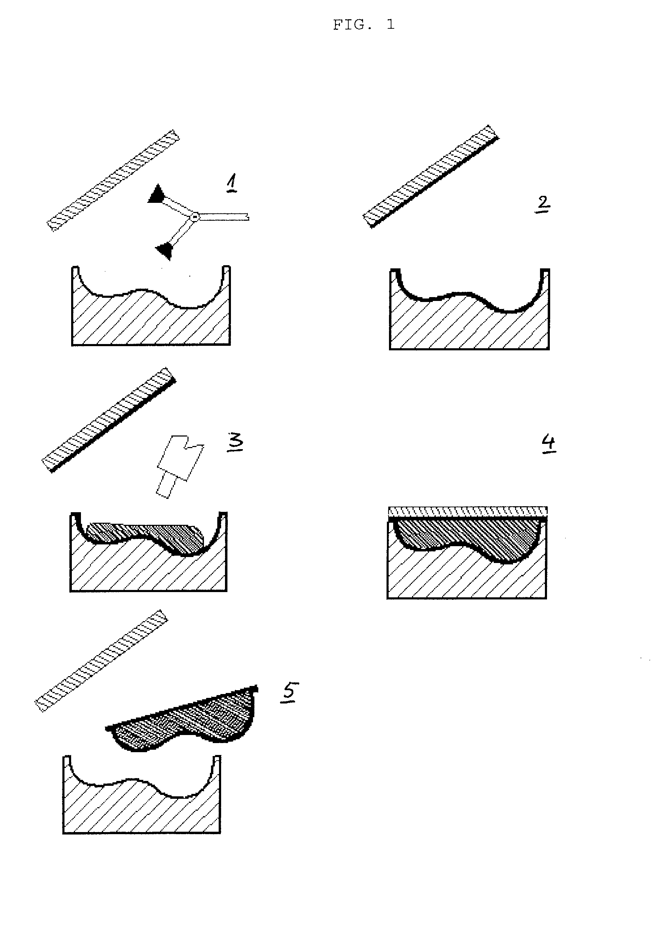

If a spraying process is used, no specific mould modification is required. Spraying techniques are known, and generally make use of a spray gun. The elastomer may be sprayed onto the inner mould surfaces, using conventional 1- or 2- component spraying machines based on low pressure (< about 50 bars, with mechanical mixing devices) or high pressure (> about 100 bars, using impingement mixing energy) technology. Spraying is generally preferred for large articles with complex surfaces. The process of the invention using the spraying technique is represented in a schematic view in figure 1. In step 1), the skin material is sprayed onto the inner parts of both mould shells, either at the same time or one immediately after the other. In step 2), the skin material starts gelling. In step 3), after gel time, the core material is poured into the mould. In step 4) the mould is closed and the foam rises and fills the cavity. In step 5), the final article is demoulded. Gas is then evacuated using known techniques, preferably while the article is still warm.

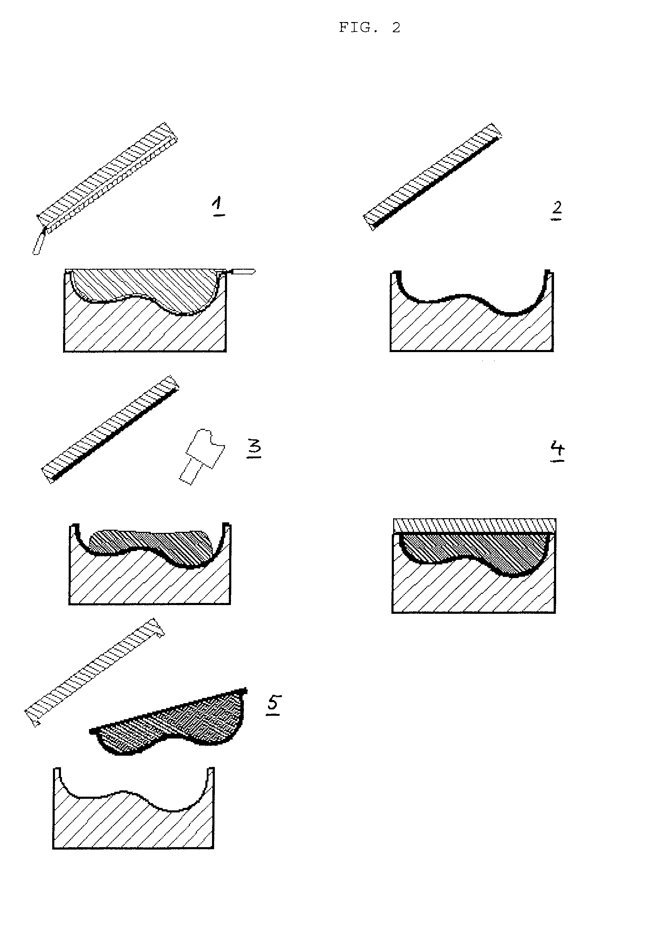

RIM process comprises injecting the separate reactants into a mould. If a RIM process is preferred, however, one or more intermediate mould shells/lids are typically needed to define the exact shape and thickness of the skin. While the spray technique is easy to carry out and of low cost, the RIM technique provides skin having a perfectly consistent thickness and substantially no bubble. The RIM technique may also be based on multi-component mixing using impingement energy at high pressures. When designing the moulds for use with the RIM technology, care should be taken to ensure that the skin consistently stays with the outer part of the mould shell, to facilitate the subsequent application of the foam material. This technology is well known by industrial mould designers/manufacturers. The process of the invention using the RIM technique is represented in a schematic view in figure 2. In step 1), the skin material is injected into thin closed moulds formed by the outer shell of the mould for the final article and a corresponding inner mould shell, either at the same time or one immediately after the other. In step 2), after a time sufficient after gel time, the corresponding inner mould shell is pulled away from the elastomeric skins. In step 3), after gel time, the core material is poured into the mould. In step 4) the mould is closed and the foam rises, fills the mould cavity and cure. In step 5), the final article is demoulded. Gas is then evacuated using known techniques, preferably while the article is still warm.

Mould materials such as epoxy or polyester resins (which may be filled with metal powders or beads), steel sheeting, cast aluminium, or the like may be used. Internal sleeves, which may be made of compact polyurethane or silicone elastomers may also be used to improved the ability to demould the part, e.g. in the case of complex contours, undercuts, etc. or to improve the definition of textured surfaces.

The application of the elastomer material is usually preceded by the application of a mould release agent. Such high molecular weight wax, soap or polysiloxane based release agent solutions are well known in the art. They may be dissolved in e.g. hydrocarbon solvents, or emulsified in water. Also, before the application of the skin material, an in-mould coating may be applied, to give a more uniform colour appearance, and eventually also a more consistent and more stable colour. In-mould coatings or paints based e.g. on aliphatic polyurethane resins or acrylic resins are well known in the art. These materials are usually applied by spraying techniques, in very thin layers (10-100 $\mu$m).

A flexible foam composition (resilient and/or viscoelastic) or a gel composition is then applied, preferably into the open mould, when the elastomer has gelled sufficiently to withstand its application without damage (within about 10 seconds to about 1 minute). The mould is then closed to give its final shape to the article, and to ensure that the skin from the mould lid adheres securely to the core material (usually a foam), and to the part of the skin attached to the bottom part of the mould, thereby encapsulating the whole core material (foam). When the polymerization of both core material (foam) and elastomer is completed, the mould is then opened so that the finished article may be removed.

It should be understood that the second part of the skin can be sprayed or injected at different times vis-à-vis the time for core material (foam) deposition. Depending on the reactivity of the composition (notably gel time), both skin layers can be applied to the mould at the same time, and the core material (foam) can be deposited shortly thereafter. Alternatively, the first skin material can be deposited, then the core material (foam) can be deposited and then the second skin material can be deposited. The steps of deposition of the second skin material and the core material (foam) can also partly or wholly overlap, if needed or if desired.

Typical process times are as follows: the string time will range between 5 to 60 sec, preferably between 10 and 45 sec. Hence, the core material (foam) will be deposited after the elastomeric skin material has gelled, but before it has substantially polymerized. Hence, the core material is usually deposited between two times, referred to as "string time" or gel time, and "string free time". The string time is the first time, during the polymerization of the skin material, when a thin "string" or thread of polymer may be pulled from the surface using a small sharp metallic object such as the end of a cutter blade. The "string free" time is measured when such a string can no longer be pulled because polymerization has proceeded further. Typical demould times may range from about 40 to about 800 seconds, preferably 50 to about 400 seconds.

Elastomer thickness may range from about 0.1 to about 1 mm, preferably 0.3 to 0.8 mm, most preferably 0.4 to 0.6 mm, depending on its rheology, reactivity, and the final degree of protection desired for the inner cushioning material. Thinner and softer elastomers minimize their contribution to the cushioning properties of the underlying core material, and therefore give more comfortable articles. The tensile strength of the elastomeric material is generally between 2000 and 12000 kPa, preferably between 3000 and 10000 kPa. In general, the higher values are obtained when the RIM technique is used. It should be understood that the elastomer skin thickness mentionned above refers to interface with the supported body, it may be higher in other zones of the finished article, such as around inserts or fastening accessories, on bottom or sides, or other areas where comfort is not a prime concern.

The contribution of the skin to foam hardness, as measured using a small hemispherical indentor should not exceed 25% of the hardness of the final article comprising foam and skin, preferably 20%, more preferably 16%, advantageously 12%. This can be adjusted by selecting the elastomeric skin properties, such as the thickness, the modulus, etc. It is in general preferred that the elastomer modulus be low to minimize the elastomer contribution to the cushion or mattress support properties. At the same time, the lower thickness limit is determined by the other mechanical properties required (tensile and tear properties). For the same reason, its thickness should also be low (provided an impervious layer can still be formed). Because it provides a tighter control of skin thickness and a more uniform, bubble-free material, the RIM technique generally allows thinner skins to be produced.

The elastomer material may be any material, but polyurethane or polyurethane-urea elastomers are preferred for (i) their fast reactivity which minimizes dripping effects and production times; (ii) their good mechanical and ageing properties and (iii) their ability to remain very soft and elastic under a wide range of temperature conditions.

The elastomeric material is usually produced by reacting a polyol and a polyisocyanate.

The polyol will generally have an average hydroxyl number of from 20 to 300, and hydroxyl functionalities of from 1.5 to 3 (nominal number average molecular weight, as determined by calculation from their starting materials), and a MW generally from 500 to 20000 Da. Mixtures may be used. These polyols can be polyether polyols, polyester polyols, polyamides polyols, polyesteramides polyols, polythioether polyols, polycarbonate polyols, polyacetal polyols, polyolefin polyols, polylactone polyols, polysiloxane polyols, and the like. Preferred polyols are polyether polyols. Suitable polyols have been fully described in the prior art and include reaction products of alkylene oxides, for example ethylene oxide and/or propylene oxide, with initiators containing from 2 to 8 active hydrogen atoms per molecule. Suitable initiators are known in the art.

Any known isocyanates may be used, including aromatic, aliphatic, cycloaliphatic may be used alone or in combinations; prepolymers with the above polyols or with lower MW polyols or glycols may also be used. Preferred prepolymers have NCO contents from about 5 to about 30%, preferably from 8 to 25%. Specific isocyanates include isomers and/or oligomers of phenylene diisocyanates, toluene diisocyanates, diphenylmethane diisocyanates, or their so-called hydrogenated analogues (obtained by the hydrogenation of the corresponding amines before reaction with phosgene to obtain the isocyanates), naphthylene diisocyanate, isophorone diisocyanate, hexamethylene diisocyanates, and/or their blends and prepolymers. The crude phosgenation mixtures or the purified streams may also be used. Modified isocyanates, containing e.g. uretodione, carbodiimide, urea, allophanate, biuret, isocyanurate and/or urethane groups may also be used. In particular are used the aromatic polyisocyanates such as diphenylmethane diisocyanate in the form of its 2,4'-, 2,2'-and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2. MDI compositions are preferred, especially those with a high content of diisocyanates, and especially, among the above, those with a high content of 2,4' isomer.

Other additives include low molecular weight (80 to 499 Da) glycols such as ethylene glycol, butane diols, 2-methyl propane 1,3-diol, alkanolamines, such as triethanolamine, or diamines, especially aromatic diamines such as diethyl toluene diamine or other alkyl substituted aromatic diamines. These additives are well known in polyurethane technology as chain extenders. Thixotropic agents such as aliphatic amines with molecular weight ranging from about 80 to 2000 Da may also be used.

Other conventional ingredients (additives and/or auxiliaries) may be used in making the polyurethanes. These include catalysts, surfactants, flame proofing agents, fillers, pigments, antistatic and biocidal additives, stabilizers (UV and heat) and the like.

As catalysts those may be used which enhance the formation of urethane and urea bonds like tin compounds, such as a tin salt of a carboxylic acid, e.g. dibutyltin dilaurate and stannous octoate and organometallic salts of Bi, Zr, Zn, Fe, Cu, Zn; amines, e.g. dimethylcyclohexylamine, triethylene diamine. Additional examples may be found in "Flexible Polyurethane Foams" by G. Woods (Wiley, 1984).

The equivalent ratios of isocyanate to isocyanate reactive groups may range from 0.8 to 1.3, preferably 0.9 to 1.1, most preferably 1.0 to 1.05.

The foam composition (resilient and viscoelastic) may be made from similar compositions as described above for the elastomer, except that no or very low levels of low molecular eight polyols are used. Viscoelastic foams may be usually produced from a polyol blend comprising so-called "rigid polyols" (e.g. having an OH value of 180-500), or mixtures of polyols with various hydroxyl numbers and EO/PO ratios.

In the case of polyether based high resilience polyurethane foams, where the main polyol comprises a majority of propylene oxide based moieties, so-called cell opener polyether polyols, e.g. based on high levels of ethylene oxide may be added to provide flexible foams with open cells on demoulding. This avoids having to rupture the remaining cell windows by physical means (e.g. compression of vacuum) and thus ensures the dimensional stability of the final article.

So-called polymer or graft polyols (i.e. containing polystyrene, polyacrylonitrile, polyurethane or polyurea particles) may also be added, for example to increase foam hardness.

Water is generally added to promote foaming by carbon dioxide generated from the reaction of water and isocyanate groups. Additional carbon dioxide may also be added to the foaming mixture.

The combined effect of the gas (added and generated) generally brings foam moulded density to 25 to 120 kg/m3, preferably 30 to 100 kg/m3, most preferably between 35 to 90 kg/m3. Foam hardness is preferably low, with indentation measured by ISO 2439 about 30 to 300 N at 40% indentation, preferably 60 to 250 N, most preferably 60 to 150 N.

As far as polyurethanes are concerned, the skilled man may revert to the known publications, such as for example Polyurethanes Handbook 2$^{nd}$ edition, G. Oertel, 1994.

EXAMPLES

The following examples illustrate the invention without limiting it.

Example 1.

A 2-part seat cushion mould made of epoxy resin filled with aluminium powder was heated to 65°C. The interior surfaces of both mould shells were coated with a release agent (918/9 from Kluber Chemie AG) which was left to dry for about 30 seconds. The mould was then placed under the high pressure mixing head of a 2-component polyurethane processing machine (PSM 3000 from Isotherm AG, Switzerland). The two machine tanks were filled respectively with the polyol and isocyanate component of a soft elastomer system, and the machine was set to operate under the following conditions:

| Raw materials from Elastogran | Polyol Elastocoat C6355/108 | Isocyanate SP 2000 |
|---|---|---|
| Temperature (°C) | 60 | 65 |
| Mixing Pressure (Bar) | 150 | 150 |
| Nozzle diameter (mm) | 0.5 | 0.3 |
| Output (g/s) | 18 | 6 |

A manipulating robot was used to spray during 18 sec. onto both inner surfaces (plus the parting line) until the average thickness reached about 0.4 mm.

When this composition had gelled sufficiently (about 30 s later), a second polyurethane composition designed to yield a flexible viscoelastic foam was poured during 4 sec. into the mould from a separate 2-component high pressure mixing head. The following parameters are used.

|  | Polyol Bayfit 41BM07 | Isocyanate Desmodur 20IK55 |
|---|---|---|
| Temperature (°C) | 25 | 25 |
| Mixing Pressure (Bar) | 150 | 150 |
| Nozzle diameter (mm) | 1.3 | 0.6 |
| Output (g/s) | 120 | 42.4 |

The amount used was sufficient to fill the mould and, after a residence time of 12 minutes, yielded a moulded foam. A final 3 days cure was then applied upon standing at room conditions, before measuring foam properties.

Example 2.

Example 1 was repeated, except that, after the elastomer skin was sprayed, a polyurethane gel composition was poured into the mould until a layer of about 10 mm was obtained. The gel was made from Polygel A & B components (from Seremi, France) with components at 25°C (ratio A/B=100/30). The flexible foam composition of example 1 was then poured into the mould in an amount such that the moulded foam density was 80 kg/m3 as in example 1.

Example 3.

Example 1 was repeated, except that, instead of a viscoelastic foam composition, another foam composition designed to yield high resilience foam was poured into the mould. The following parameters are used.

|  | Polyol Bayfit 40IK22 | Isocyanate Desmodur 20IK55 |
|---|---|---|
| Temperature (°C) | 25 | 25 |
| Mixing Pressure (Bar) | 150 | 150 |
| Nozzle diameter (mm) | 1.3 | 0.6 |
| Output (g/s) | 115 | 40 |

Example 4.

The final articles of examples 1 and 3 were tested as to their properties. The skin was peeled off from the foam using a doctor blade. In the modified indentation method, the round plate indentor with a diameter 200mm specified in ISO 2439 was replaced by a hemispherical indentor with diameter 50mm. This is intended to more accurately approach in shape and size a human body part such as elbow, shoulder, knee or heel.

|  | Standard | Ex. 1 | Ex. 3 |
|---|---|---|---|
| Density (kg/m$^3$) | ISO845 | 80 | 41 |
| Compression Strength (40%, 1st cycle) (kPa) | ISO 3386-A | 2 | 3.2 |
| Tensile strength (kPa) | ISO 1798 | 50 | 35 |
| Elongation (%) | ISO 1798 | 120 | 140 |
| Tear Strength (N/m) | ISO 8307 | 180 | 120 |
| Compression set (75%) (%) | ISO 1856 | 8 | 12 |
| Indentation hardness (40%, 1st cycle, foam alone) (N) | ISO 2439 | 85 | 120 |
| Indentation hardness (40%, 1st cycle, foam and skin) (N) | ISO 2439 | 105 | 140 |
| Indentation hardness (40%, 1st cycle, foam alone) (N) | Modified ISO 2439 | 15 | 21 |

(continued)

|  | Standard | Ex. 1 | Ex. 3 |
|---|---|---|---|
| Indentation hardness (40%, 1st cycle, foam and skin) (N) | Modified ISO 2439 | 18 | 24 |

The modified ISO 2439 method above uses a hemispherical indentor with a diameter of 50 mm instead of the usual cylindrical indentor plate with a diameter of 200 mm.

Hence, the skin contribution, defined as:

[(Hardness on skin and foam) - (Hardness on foam alone)]/

[Hardness on skin and foam], where the hardness is measured

in accordance with the modified ISO 2439,

can be calculated for as follows (in %).

Ex. 1:      16.7
Ex. 3:      14

**Claims**

1.   Process for manufacturing an article having an integral skin thereon, comprising the steps of:

(i) providing a mould having a first part and a second part;
(ii) depositing a first elastomeric skin material on the first part of the mould to obtain a first skin part;
(iii) depositing a second elastomeric skin material on the second part of the mould to obtain a second skin part;
(iv) depositing at least one core foam material on the first skin part;
(v) closing the mould;
(vi) allowing the core foam material to rise, fill the mould cavity and cure; and
(vii) demoulding the finished article comprising a foamed core and an integral skin thereon.

2.   Process according to claim 1, in which in step (iv) the depositing step is performed at a time comprised between the string time and the string free time of the first and second skin material.

3.   Process according to claim 1 or 2, in which in step (iv) the depositing step is performed after a time comprised between 5 and 60 seconds, preferably 10 and 45 seconds, after completion of depositing steps (ii) and/or (iii).

4.   Process according to any one of claims 1 to 3, in which in step (iv) the depositing step is performed before a time comprised between 30 and 250 seconds, preferably 50 and 200 seconds, after completion of depositing steps (ii) and/or (iii).

5.   Process according to any one of claims 1 to 4, in which step (vi) is performed during 40 to 800 seconds, preferably 50 to 400 seconds.

6.   Process according to any one of claims 1 to 5, in which depositing steps (ii) and/or (iii) are performed by spraying.

7.   Process according to any one of claims 1 to 5, in which depositing steps (ii) and/or (iii) are performed by RIM.

8.   Process according to any one of claims 1 to 7, in which the elastomeric skin and foamed core material are polyurethanes or derivatives thereof.

9.   Process according to any one of claims 1 to 8, in which the foamed core material is a resilient foam or a viscoelastic foam or comprises both.

10. Process according to any one of claims 1 to 9, further comprising, before step (iv), a step of depositing a gel layer on at least one of the skin elastomeric material.

11. A moulded foamed article having a core and an outer integral elastomeric skin, the core comprising a foamed material, the skin contributing to the article hardness, as measured using an hemispherical indentor, by no more than 25%, preferably 20%, more preferably 16%, advantageously 12%.

12. A moulded foamed article having a core and an outer integral elastomeric skin, the core comprising a foamed material, the elastomeric skin having a thickness from about 0.1 to about 1 mm, preferably 0.3 to 0.8 mm, most preferably 0.4 to 0.6 mm, and having a tensile strength from about 2000 to about 12000 kPa, preferably from about 3000 to about 10000 kPa.

13. A moulded foamed article having a core and an outer integral elastomeric skin, the core comprising at least two materials, one being a foamed material.

14. The article of any one of claims 11 to 13, comprising a viscoelastic foam core or a resilient foam core or both.

15. The article of any one of claims 11 to 14, further comprising a gel layer immediately adjacent to the elastomeric skin.

16. The article of anyone of claims 11 to 15, in which the elastomeric skin and foamed material are comprised of polyurethanes or derivatives thereof.

FIG. 1

FIG. 2

**EP 1 459 862 A1**

European Patent
Office

**EUROPEAN SEARCH REPORT**

Application Number

EP 03 29 0683

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 538 521 A (PIRELLI) 17 January 1979 (1979-01-17) * page 2, line 80 - line 113; figures * | 1 | B29C44/08 B29C44/14 |
| X | PATENT ABSTRACTS OF JAPAN vol. 008, no. 182 (M-319), 22 August 1984 (1984-08-22) & JP 59 073928 A (POLYURETHAN KASEI KK), 26 April 1984 (1984-04-26) * abstract; figures * | 1 | |
| D,A | EP 0 386 818 A (RECTICEL) 12 September 1990 (1990-09-12) * page 4, line 16 - line 23 * | 1-9 | |
| X | EP 1 172 402 A (NIPPON ZEON CO) 16 January 2002 (2002-01-16) * column 63; tables 7,8 * | 11 | |
| X | EP 0 466 179 A (SUMITOMO CHEMICAL CO) 15 January 1992 (1992-01-15) * column 3, line 51 - line 54 * * column 5, line 23 * | 12 | TECHNICAL FIELDS SEARCHED (Int.Cl.7) B29C |
| X | EP 0 764 506 A (ARACO KK ;SHOWA DENKO KK (JP)) 26 March 1997 (1997-03-26) * page 5, line 1 * * page 11, line 39 - line 46 * | 13 | |
| X | US 6 050 964 A (YATES PAUL M) 18 April 2000 (2000-04-18) * column 3, line 11 - line 23; figure 2 * | 13-16 | |
| A | PATENT ABSTRACTS OF JAPAN vol. 1998, no. 13, 30 November 1998 (1998-11-30) & JP 10 211840 A (TOKAI CHEM IND LTD), 11 August 1998 (1998-08-11) * abstract; figure * | 14 | |

The present search report has been drawn up for all claims

| Place of search | Date of completion of the search | Examiner |
|---|---|---|
| The Hague | 19 November 2003 | Pipping L.E.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

European Patent
Office

**Application Number**

EP 03 29 0683

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

13

European Patent
Office

## LACK OF UNITY OF INVENTION
### SHEET B

Application Number

EP 03 29 0683

The Search Division considers that the present European patent application does not comply with the requirements of unity of invention and relates to several inventions or groups of inventions, namely:

1. claims: 1-10

    Process for manufacturing an article having an integral skin
    ---

2. claims: 11 & 14-16

    A moulded foamed article having a skin with a specific hardness
    ---

3. claims: 12 & 14-16

    A moulded foamed article having a skin with a specific thickness
    ---

4. claims: 13 & 14-16

    A moulded foamed article with a skin and a core consisting of at least two materials, one being foamed
    ---

## ANNEX TO THE EUROPEAN SEARCH REPORT
## ON EUROPEAN PATENT APPLICATION NO.

EP 03 29 0683

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2003

| Patent document cited in search report | | Publication date | Patent family member(s) | | Publication date |
|---|---|---|---|---|---|
| GB 1538521 | A | 17-01-1979 | IT | 1042968 B | 30-01-1980 |
| | | | DE | 2641528 A1 | 07-04-1977 |
| | | | FR | 2326282 A1 | 29-04-1977 |
| | | | SE | 7610746 A | 31-03-1977 |
| JP 59073928 | A | 26-04-1984 | NONE | | |
| EP 0386818 | A | 12-09-1990 | BE | 1002899 A6 | 16-07-1991 |
| | | | AT | 111397 T | 15-09-1994 |
| | | | AU | 624478 B2 | 11-06-1992 |
| | | | AU | 5012690 A | 06-09-1990 |
| | | | CA | 2011375 A1 | 03-09-1990 |
| | | | DE | 69012378 D1 | 20-10-1994 |
| | | | DE | 69012378 T2 | 16-02-1995 |
| | | | DK | 386818 T3 | 06-02-1995 |
| | | | EP | 0386818 A1 | 12-09-1990 |
| | | | ES | 2063242 T3 | 01-01-1995 |
| | | | JP | 3027914 A | 06-02-1991 |
| | | | JP | 7002337 B | 18-01-1995 |
| | | | KR | 9607304 B1 | 30-05-1996 |
| | | | PT | 93326 A ,B | 07-11-1990 |
| | | | US | 5116557 A | 26-05-1992 |
| EP 1172402 | A | 16-01-2002 | JP | 2000248096 A | 12-09-2000 |
| | | | EP | 1172402 A1 | 16-01-2002 |
| | | | US | 6372809 B1 | 16-04-2002 |
| | | | WO | 0050499 A1 | 31-08-2000 |
| EP 0466179 | A | 15-01-1992 | JP | 2508897 B2 | 19-06-1996 |
| | | | JP | 4073112 A | 09-03-1992 |
| | | | CA | 2046786 A1 | 14-01-1992 |
| | | | DE | 69129088 D1 | 23-04-1998 |
| | | | DE | 69129088 T2 | 09-07-1998 |
| | | | EP | 0466179 A2 | 15-01-1992 |
| | | | ES | 2114865 T3 | 16-06-1998 |
| | | | KR | 179387 B1 | 01-04-1999 |
| | | | US | 5516582 A | 14-05-1996 |
| EP 0764506 | A | 26-03-1997 | AU | 4890496 A | 16-10-1996 |
| | | | DE | 69618304 D1 | 07-02-2002 |
| | | | EP | 0764506 A1 | 26-03-1997 |
| | | | US | 5961902 A | 05-10-1999 |
| | | | CA | 2191474 A1 | 03-10-1996 |
| | | | CN | 1150774 A ,B | 28-05-1997 |
| | | | WO | 9630185 A1 | 03-10-1996 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 03 29 0683

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2003

| Patent document cited in search report | | Publication date | Patent family member(s) | | Publication date |
|---|---|---|---|---|---|
| US 6050964 | A | 18-04-2000 | US | 6017407 A | 25-01-2000 |
| JP 10211840 | A | 11-08-1998 | JP | 3039859 B2 | 08-05-2000 |

EPO FORM P0459

For more details about this annex : see Official Journal of the European Patent Office, No. 12/82